# EUROPEAN PATENT SPECIFICATION

(11) **EP 4 009 261 B1**
(45) Date of publication and mention of the grant of the patent: **17.04.2024**
(21) Application number: 20211975.6
(22) Date of filing: 04.12.2020
(51) Int. Cl.: G06Q 20/20, G06Q 20/32, G06Q 20/38, G06Q 20/40

(54) **DEVICES, METHODS AND A SYSTEM FOR SECURE ELECTRONIC PAYMENT TRANSACTIONS**
VORRICHTUNGEN, VERFAHREN UND SYSTEM FÜR SICHERE ELEKTRONISCHE BEZAHLTRANSAKTIONEN
DISPOSITIFS, PROCÉDÉS ET SYSTÈME POUR DES TRANSACTIONS DE PAIEMENT ÉLECTRONIQUE SÉCURISÉES

(43) Date of publication of application: 08.06.2022
(73) Proprietor: Rubean AG, 81379 München (DE)
(72) Inventor: GEUPEL, Hermann, 81925 München (DE); SPITZ, Stephan, 85757 Karlsfeld (DE)
(74) Representative: Patentship Patentanwaltsgesellschaft mbH

(56) References cited:
- US-A1- 2018 005 230
- US-A1- 2018 096 329

## Description

### TECHNICAL FIELD

The invention relates to electronic payment transactions. More specifically, the invention relates to devices, methods and a system for secure electronic payment transactions involving a mobile merchant communication device, in particular a merchant mobile phone.

### BACKGROUND OF THE INVENTION

Conventionally a lot of electronic payment transactions between a merchant and a customer, who wants to pay, for instance, for goods or services of the merchant, often involve an interaction between a point-of-sale (POS) terminal of the merchant and a payment card (e.g. credit card or debit card) of the customer. After the customer interfaces the payment card with the POS terminal, and the POS terminal reads the account number from the payment card, the POS terminal may generate an online authorization request (e.g. authorization amount, and account number), and transmit the authorization request to a payment server. If the customer's account has a credit or balance that is sufficient to process the payment, the payment server generally settles the authorized amount with the customer's account, generates an authorization response message, and transmits the authorization response message to the POS terminal.

Document US 2018/005230 A1 discloses a method and system to establish a secure communication channel between a payment object reader and a payment terminal.

Due to the widespread adoption of mobile phones, tablet computers and other types of COTS (commercial-off-the-shelf) devices in more and more electronic payment transactions POS terminals are being replaced, for instance, by mobile phones in that for processing a payment transaction a merchant mobile phone interacts with a payment card and/or a mobile phone of the customer. Often the authorization of the payment transaction requires the customer to enter a PIN or the like, i.e. security relevant data of the customer, into a virtual or physical PIN pad of the merchant mobile phone. Therefore, it has to be ensured that the security relevant data of the customer for authorizing the payment transaction are processed by the merchant mobile phone in a secure manner, i.e. that the security status of the merchant mobile phone is integer.

### SUMMARY OF THE INVENTION

It is an object of the invention to provide improved devices, methods and system for secure electronic payment transactions.

The foregoing and other objects are achieved by the subject matter of the independent claims. Further embodiments and implementation forms are apparent from the dependent claims, the description and the figures.

According to a first aspect a monitoring server for monitoring a security integrity status of a mobile merchant communication device is provided. The mobile merchant communication device is configured to interact with a customer payment device, e.g. an electronic chip card, i.e. payment card of the customer or a mobile customer communication device, for processing an electronic payment transaction. In an embodiment, the mobile merchant communication device may be a mobile phone, tablet computer or another type of COTS device of the merchant.

The monitoring server comprises a communication interface configured to obtain at a plurality of times a respective first integrity status data set from the mobile merchant communication device, wherein the data of each first integrity status data set is indicative of a current integrity status of the mobile merchant communication device. The monitoring server further comprises a processing circuitry configured to determine a current integrity status of the mobile merchant communication device on the basis of the respective first integrity status data set. As will be appreciated, obtaining the respective first integrity status data set from the mobile merchant communication device at a plurality of points in time can be considered as background monitoring of the integrity status of the mobile merchant communication device by the monitoring server.

The communication interface of the monitoring server is further configured to obtain prior to obtaining the next first integrity status data set a second integrity status data set from the mobile merchant communication device for processing the payment transaction, in case the time elapsed since obtaining the most recent first integrity status data set is larger than a pre-defined time interval threshold. The second integrity status data set is indicative of the current integrity status of the mobile merchant communication device. In other words, the monitoring server is configured to obtain the second integrity status data set from the mobile merchant communication device prior to the next scheduled background monitoring event, only if the most recent background monitoring event has been too long ago, as defined by the time interval threshold.

In a further embodiment, the processing circuitry of the monitoring server is configured, in response to a request from the payment server, to determine the current integrity status of the mobile merchant communication device on the basis of the second integrity status data set and to send information about the current integrity status of the mobile merchant communication device determined on the basis of the second integrity status data set to the payment server. Based on the information about the current integrity status of the mobile merchant communication device the payment server may further process the payment transaction, e.g. authorize or block the processing of the payment.

In an embodiment, the respective first integrity status data set and the second integrity status data set may comprise the same type of data indicative of the integrity status of the mobile merchant communication device. In a further embodiment, the respective first integrity status data set may comprise more integrity status data indicative of the current integrity status of the mobile merchant communication device than the second integrity status data set. In an embodiment, the second integrity status data set may be a subset of a respective first integrity status data set.

In an embodiment, the monitoring server may comprise a database configured to persistently store the plurality of first integrity status data sets and/or the second integrity status data set.

In a further embodiment, the processing circuitry of the monitoring server is configured, in response to the request from the payment server, to determine the current integrity status of the mobile merchant communication device on the basis of the most recent first integrity status data set and the second integrity status data set and to send information about the current integrity status of the mobile merchant communication device determined on the basis of the most recent first integrity status data set and the second integrity status data set to the payment server. For instance, in an embodiment, where the second integrity status data set is a subset of a respective first integrity status data set, the processing circuitry of the monitoring server may be configured to determine the current integrity status of the mobile merchant communication device on the basis of the data of the second integrity status data set and the additional data of the most recent first integrity status data set not included in the second integrity status data set.

In a further embodiment, the communication interface of the monitoring server is configured, in response to the request from the payment server, to send information about the current integrity status of the mobile merchant communication device determined on the basis of the most recent first integrity status data set to the payment server, in case the time elapsed since obtaining the most recent first integrity status data set is not larger than the time interval threshold.

In an embodiment, the plurality of times, when the monitoring server obtains the respective first integrity status data set, may be regularly spaced in time, i.e. differ in time by a substantially constant value. For instance, in an embodiment the monitoring server may be configured to obtain the respective first integrity status data set every 5 minutes from the mobile merchant communication device. In an embodiment, the monitoring server may be configured to obtain the respective first integrity status data set from the mobile merchant communication device by actively requesting the respective first integrity status data set from the mobile merchant communication device or by receiving the respective first integrity status data set from the mobile merchant communication device without a preceding request from the monitoring server. In an embodiment, a monitoring client may be implemented on the mobile merchant communication device, wherein the monitoring client is configured to schedule the background monitoring events and actively send at the plurality of scheduled times the respective first integrity status data set to the monitoring server.

In a further embodiment, the communication interface is further configured to send information about the current integrity status of the mobile merchant communication device to the mobile merchant communication device. The mobile merchant communication device, in turn, may forward the information about the current integrity status of the mobile merchant communication device to the mobile customer communication device for informing the customer about the integrity status of the mobile merchant communication device. In a further embodiment, the monitoring server may be configured to send the information about the current integrity status of the mobile merchant communication device directly to the mobile customer communication device.

In an embodiment, the communication interface of the monitoring server may be further configured to send the information about the current integrity status of the mobile merchant communication device together with a first time stamp to the mobile merchant communication device. The mobile merchant communication device may, in turn, forward the information about the current integrity status of the mobile merchant communication device and the first time stamp from the monitoring server together with a second time stamp from the mobile merchant communication device to the mobile customer communication device. In an embodiment, the first time stamp may be digitally signed by the monitoring server and the second time stamp may be digitally signed by the mobile merchant communication device.

In an embodiment, the communication interface of the monitoring server may be further configured to receive a digital signature of the integrity status data, i.e. the respective first integrity status data set and/or the second integrity status data set, signed by the mobile merchant communication device and to verify the digital signature of the integrity status data with a public key of the monitoring server.

In a further embodiment, the first integrity status data set and/or the second integrity status data set comprises data indicative of whether a bootloader of the mobile merchant communication device has been unlocked. In an embodiment, the monitoring server may determine the integrity status of the mobile merchant communication device to be unsafe, in case the first integrity status data set and/or the second integrity status data set indicates that the bootloader of the mobile merchant communication device has been unlocked.

In a further embodiment, the first integrity status data set and/or the second integrity status data set comprises a chain of certificates for attesting the integrity of one or more cryptographic keys of the mobile merchant communication device, wherein the processing circuitry of the monitoring server is configured to determine the current integrity status of the mobile merchant communication device by verifying the integrity of the one or more cryptographic keys of the mobile merchant communication device based on the chain of certificates.

In a further embodiment, the mobile merchant communication device may be configured to execute a payment software application configured to process the payment transaction, wherein the first integrity status data set and/or the second integrity status data set comprises data indicative of a version number of the payment software application and wherein the processing circuitry of the monitoring server is configured to determine the current integrity status of the mobile merchant communication device based on the version number of the payment software application. In an embodiment, the monitoring server may determine the integrity status of the mobile merchant communication device to be unsafe, in case the version number of the payment software application running on the mobile merchant communication device is not the most recent version of the payment software application.

In a further embodiment, the first integrity status data set and/or the second integrity status data set comprises data from a gyro sensor of the mobile merchant communication device, wherein the processing circuitry of the monitoring server is configured to determine the current integrity status of the mobile merchant communication device by determining whether the data from the gyro sensor of the mobile merchant communication device indicate a movement and/or rotation of the mobile merchant communication device.

In a further embodiment, the first integrity status data set and/or the second integrity status data set comprises a list of software applications installed on the mobile merchant communication device, wherein the processing circuitry is configured to determine the current integrity status of the mobile merchant communication device by comparing the list of software applications installed on the mobile merchant communication device with a black list of software applications. In an embodiment, the monitoring server may determine the integrity status of the mobile merchant communication device to be unsafe, in case the list of software applications installed on the mobile merchant communication device includes software applications from the blacklist. This blacklist may be maintained in a database of the monitoring server.

According to a second aspect a mobile merchant communication device is provided. The mobile merchant communication device is configured to interact with a customer payment device, e.g. an electronic chip card, i.e. payment card of the customer or a mobile customer communication device, for processing an electronic payment transaction. In an embodiment, the mobile merchant communication device may be a mobile phone, tablet computer or another type of COTS device of the merchant.

The mobile merchant communication device comprises a communication interface configured to send at a plurality of times a respective first integrity status data set to a monitoring server, wherein the data of each first integrity status data set is indicative of a current integrity status of the mobile merchant communication device. The monitoring server comprises a processing circuitry configured to determine a current integrity status of the mobile merchant communication device on the basis of the respective first integrity status data set. As will be appreciated, sending the respective first integrity status data set to the monitoring server at a plurality of points in time can be considered as background monitoring of the integrity status of the mobile merchant communication device by the monitoring server.

The communication interface of the mobile merchant communication device is further configured to send a second integrity status data set to the monitoring server for processing the payment transaction, in case the time elapsed since sending the most recent first integrity status data set is larger than a pre-defined time interval threshold. The second integrity status data set is indicative of the current integrity status of the mobile merchant communication device. In other words, the mobile merchant communication device is configured to actively send, i.e. push the second integrity status data to the monitoring server prior to the next scheduled background monitoring event, only if the most recent background monitoring event has been too long ago, as defined by the time interval threshold.

Further features of the mobile merchant communication device according to the second aspect of the present invention result directly from the functionality of the monitoring server according to the first aspect of the present invention as well as its different embodiments described above and below.

According to a third aspect an electronic payment system is provided. The electronic payment system comprises a monitoring server according to the first aspect, at least one mobile merchant communication device according to the second aspect, a customer payment device and a payment transaction server (or short payment server). The payment transaction server is configured to transmit a request to the monitoring server for receiving information about a current integrity status of the mobile merchant communication device and to authorize a payment transaction based on the information about the current integrity status of the mobile merchant communication device received from the monitoring server in response to the request. In an embodiment, the mobile merchant communication device may be a smart phone, tablet computer or the like. Likewise, the customer payment device may be a smart phone, tablet computer or the like as well.

According to a fourth aspect a method for monitoring a security integrity status of a mobile merchant communication device is provided, wherein the mobile merchant communication device is configured to interact with a customer payment device, e.g. an electronic chip card, i.e. payment card of the customer or a mobile customer communication device, for processing an electronic payment transaction. The method according to the third aspect comprises the steps of:
obtaining at a plurality of times a respective first integrity status data set from the mobile merchant communication device, wherein each first integrity status data set is indicative of a current integrity status of the mobile merchant communication device;
determining a current integrity status of the mobile merchant communication device on the basis of the respective first integrity status data set;
obtaining prior to obtaining the next first integrity status data set a second integrity status data set from the mobile merchant communication device for processing the payment transaction, wherein the second integrity status data set is indicative of the current integrity status of the mobile merchant communication device, in case the time elapsed since obtaining the most recent first integrity status data set is larger than a time interval threshold.

The monitoring method according to the fourth aspect of the present invention can be performed by the monitoring server according to the first aspect of the present invention. Thus, further features of the monitoring method according to the fourth aspect of the present invention result directly from the functionality of the monitoring server according to the first aspect of the present invention as well as its different embodiments described above and below.

According to a fifth aspect, a computer program product comprising a non-transitory computer-readable storage medium for storing program code which causes a computer or a processor to perform the monitoring method according to the fourth aspect, when the program code is executed by the computer or the processor, is provided.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating an electronic payment system according to an embodiment, including a monitoring server according to an embodiment;
Fig. 2 shows a schematic diagram illustrating an electronic payment system according to a further embodiment, including a monitoring server according to an embodiment;
Fig. 3 shows a signaling diagram illustrating the process flow implemented by the components of the electronic payment system of figure 2, and
Fig. 4 shows a flow diagram illustrating steps of a monitoring method according to an embodiment.

In the figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be implemented. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

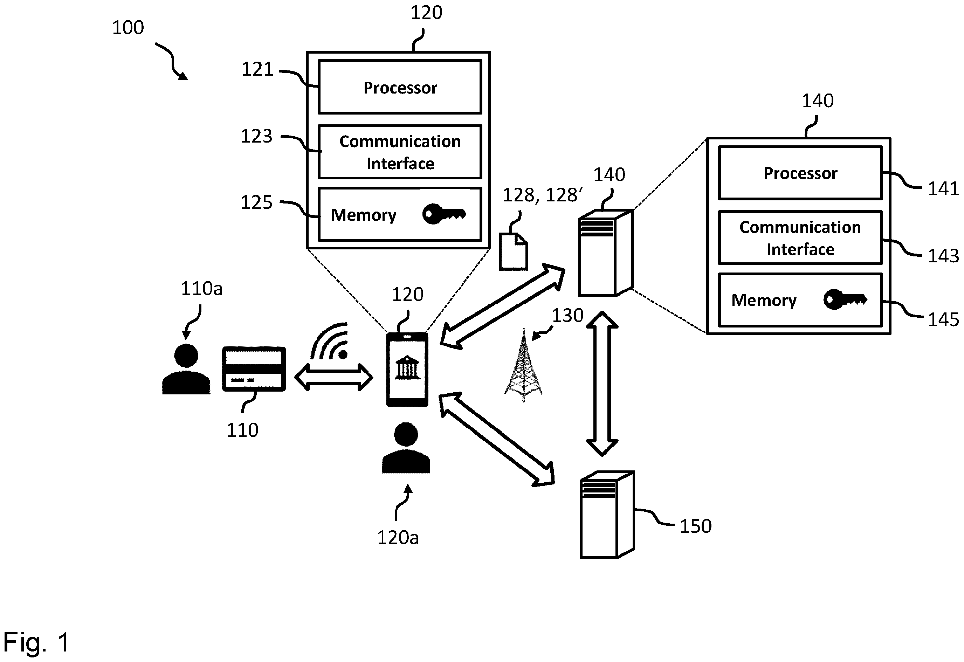

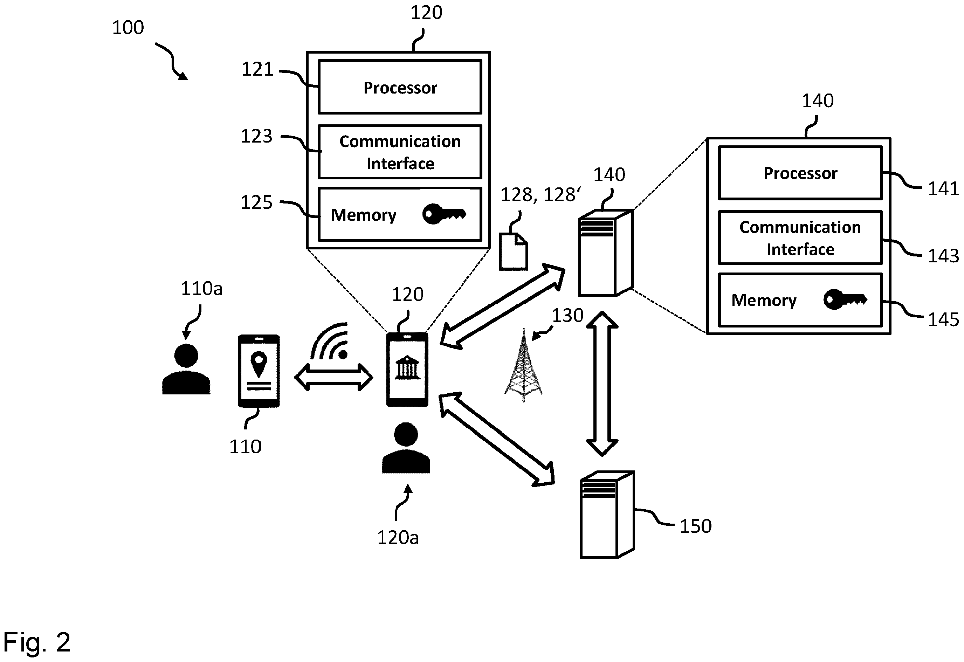

Figure 1 shows a schematic diagram illustrating an electronic payment system 100 according to an embodiment for processing an electronic payment transaction between a mobile merchant communication device 120 operated by a merchant 120a and a customer payment device. The mobile merchant communication device 120 may be, for instance, a mobile phone, tablet computer or the like operated by the merchant 120a. As illustrated in figure 1, the mobile merchant communication device 120 may comprise a processor 121 for processing data, a communication interface 123 for communicating with the other components of the payment system 100 and a memory 125 for storing data. The mobile merchant communication device 120 may comprise a physical or virtual PIN pad allowing the customer 110a to enter a secret PIN for authorizing the payment transaction. As illustrated in figure 1, the customer payment device 110 may be an electronic chip card, i.e. a payment card 110 of a customer 110a or, as illustrated in the embodiment of the payment system 100 shown in figure 2, a mobile customer communication device 110, e.g. a mobile phone 110, operated by the customer 110a. In an embodiment, the communication interface 123 of the mobile merchant communication device 120 may comprise an NFC interface for communicating with the mobile customer communication device 110.

In addition to the mobile merchant communication device 120 and the mobile customer communication device 110 the electronic payment system 100 illustrated in figure 1 further comprises a monitoring server 140 for monitoring a security integrity status of the mobile merchant communication device 120 and a payment server 150 for processing an electronic payment transaction between the mobile merchant communication device 120 and the customer payment device 110. As illustrated in figure 1, the mobile merchant communication device 120 may be configured to communicate with the monitoring server 140 and/or the payment server 150 via a wireless and/or wired communication network 130. The mobile merchant communication device 120 is configured to interact with the customer payment device 110, e.g. an electronic chip card, i.e. payment card of the customer 110a or the mobile customer communication device 110, for processing an electronic payment transaction. In an embodiment, the mobile merchant communication device 120 may be a mobile phone, tablet computer or the like of the merchant 120a.

As illustrated in figure 1, the monitoring server 140 comprises a communication interface 143 configured to obtain at a plurality of times a respective first integrity status data set 128 from the mobile merchant communication device 120, wherein the data of each first integrity status data set 128 is indicative of a current integrity status of the mobile merchant communication device 120. Moreover, the monitoring server 140 further comprises a processing circuitry 141 configured to determine a current integrity status of the mobile merchant communication device 120 on the basis of the respective first integrity status data set 128. As will be appreciated, obtaining the respective first integrity status data set 128 from the mobile merchant communication device 120 at a plurality of points in time can be considered as background monitoring of the integrity status of the mobile merchant communication device 120 by the monitoring server 140. In an embodiment, the monitoring server 140 may be configured to obtain the respective first integrity status data set 128 from the mobile merchant communication device 120 by actively requesting the respective first integrity status data set 128 from the mobile merchant communication device 120 or by receiving the respective first integrity status data set 128 from the mobile merchant communication device 120 without a preceding request from the monitoring server 140. In an embodiment, a monitoring client may be implemented on the mobile merchant communication device 120, wherein the monitoring client is configured to schedule the background monitoring events and actively send at the plurality of scheduled times the respective first integrity status data set 128 to the monitoring server 140. The monitoring client may be configured to subscribe with the monitoring server 140 for enabling the monitoring server 140 to monitor the integrity status of the mobile merchant communication device 120.

In addition to the background monitoring described above, the mobile merchant communication device 120 and the monitoring server 140 are configured to perform a further monitoring under certain conditions, for processing a payment transaction between the mobile merchant communication device 120 and the customer payment device 110. More specifically, the communication interface 123 of the mobile merchant communication device 120 is configured to send a second integrity status data set 128' to the monitoring server 140, in case the time elapsed since obtaining the most recent first integrity status data set 128 is larger than a pre-defined time interval threshold. Likewise, the communication interface 143 of the monitoring server 140 is further configured to obtain the second integrity status data set 128' from the mobile merchant communication device 120, in case the time elapsed since obtaining the most recent first integrity status data set 128 is larger than the pre-defined time interval threshold. The second integrity status data set 128' is indicative of the current integrity status of the mobile merchant communication device 120. In other words, the mobile merchant communication device 120 is configured to actively send the second integrity status data set 128' to the monitoring server 140, only if the most recent background monitoring event has been too long ago, as defined by the time interval threshold.

In an embodiment, the processing circuitry 141 of the monitoring server 140 is configured, in response to a request from the payment server 150, to determine the current integrity status of the mobile merchant communication device 120 on the basis of the second integrity status data set 128' and to send information about the current integrity status of the mobile merchant communication device 120 determined on the basis of the second integrity status data set 128' to the payment server 150. Based on the information about the current integrity status of the mobile merchant communication device 120 the payment server 150 may further process the payment transaction, e.g. depending on the current integrity status of the mobile merchant communication device 120 authorize or block the further processing of the payment transaction.

In an embodiment, the information about the current integrity status of the mobile merchant communication device 120 sent by the monitoring server 140 to the payment server 150 may comprise binary information, such as "integer" or "non-integer". In a further embodiment, the monitoring server 140 may be configured to determine a more differentiated integrity status of the mobile merchant communication device 120 on the basis of the first and/or second integrity status data set 128, 128', such as by employing a "traffic light system", including a green integer status, a yellow questionable status and a red non-integer status. In a further embodiment, the processing circuitry 141 of the monitoring server 140 may be configured to implement machine learning, e.g. a neural network for determining the current integrity status on the basis of the first and/or second integrity status data set 128, 128'. As generally the monitoring server 140 will monitor a plurality of mobile merchant communication devices like the mobile merchant communication device 120 shown in figures 1 and 2, this machine learning implemented by the processing circuitry 141 can be trained and continuously improved on the basis of the monitoring data obtained from these devices. This allows the monitoring server 140, for instance, to adapt to new emerging attacks on the mobile merchant communication devices.

In an embodiment, if the monitoring server 140 determines the mobile merchant communication device 120 on the basis of the first and/or second integrity status data set 128, 128' to be integer, it may respond to the monitoring client implemented on the mobile merchant communication device 120 with an indication of when or by when the monitoring server 140 expects to receive the next first integrity status data set 128 as part of the regular background monitoring. If the monitoring server 140 determines the mobile merchant communication device 120 on the basis of the first and/or second integrity status data set 128, 128' to be non-integer (possibly due to an attack by a malicious third party), it may instruct the monitoring client to delete all sensitive data of the payment application.

In an embodiment, the respective first integrity status data set 128 and the second integrity status data set 128' may comprise the same type of data indicative of the integrity status of the mobile merchant communication device 120. In a further embodiment, the respective first integrity status data set 128 may comprise more, i.e. further integrity status data indicative of the current integrity status of the mobile merchant communication device 120 than the second integrity status data set 128'. In an embodiment, the second integrity status data set 128' may be a subset of a respective first integrity status data set 128. In an embodiment, the monitoring server 140 may comprise a database implemented in the memory 145 and configured to persistently store the plurality of first integrity status data sets 128 and/or the second integrity status data set 128'.

In an embodiment, the processing circuitry 141 of the monitoring server 140 is configured, in response to the request from the payment server 150, to determine the current integrity status of the mobile merchant communication device 120 on the basis of the most recent first integrity status data set 128 and the second integrity status data set 128' and to send information about the current integrity status of the mobile merchant communication device 120 determined on the basis of the most recent first integrity status data set 128 and the second integrity status data set 128' to the payment server 150. For instance, in an embodiment, where the second integrity status data set 128' is a subset of a respective first integrity status data set 128, the processing circuitry 141 of the monitoring server 140 may be configured to determine the current integrity status of the mobile merchant communication device 120 on the basis of the data of the second integrity status data set 128' and the additional data of the most recent first integrity status data set 128 not included in the second integrity status data set 128'.

In an embodiment, the communication interface 143 of the monitoring server 140 is configured, in response to the request from the payment server 150, to send information about the current integrity status of the mobile merchant communication device 120 determined on the basis of the most recent first integrity status data set 128 to the payment server 150, in case the time elapsed since obtaining the most recent first integrity status data set 128 is not larger than the time interval threshold.

In an embodiment, the plurality of times, when the monitoring server 140 obtains the respective first integrity status data set 128, may be regularly spaced in time, i.e. differ in time by a substantially constant value. For instance, in an embodiment the monitoring server 140 may be configured to obtain the respective first integrity status data set 128 every 5 minutes from the mobile merchant communication device 120.

In an embodiment, the communication interface 143 of the monitoring server 140 is further configured to send information about the current integrity status of the mobile merchant communication device 120 to the mobile merchant communication device 120. The mobile merchant communication device 120, in turn, may forward the information about the current integrity status of the mobile merchant communication device 120 to the mobile customer communication device 110 for informing the customer 110a about the integrity status of the mobile merchant communication device 120. In a further embodiment, the monitoring server 140 may be configured to send the information about the current integrity status of the mobile merchant communication device 120 directly to the mobile customer communication device 110.

In an embodiment, the communication interface 143 of the monitoring server 140 may be further configured to send the information about the current integrity status of the mobile merchant communication device 120 together with a first time stamp to the mobile merchant communication device 120. The mobile merchant communication device 120 may, in turn, forward the information about the current integrity status of the mobile merchant communication device 120 and the first time stamp from the monitoring server 140 together with a second time stamp from the mobile merchant communication device 120 to the mobile customer communication device 110. In an embodiment, the first time stamp may be digitally signed by the monitoring server 140 and the second time stamp may be digitally signed by the mobile merchant communication device 120.

In an embodiment, the communication interface 143 of the monitoring server 140 may be further configured to receive a digital signature of the integrity status data, i.e. the respective first integrity status data set 128 and/or the second integrity status data set 128', signed by the mobile merchant communication device 120 and to verify the digital signature of the integrity status data with a public key of the mobile merchant communication device 120.

In an embodiment, the first integrity status data set 128 and/or the second integrity status data set 128' comprises data indicative of whether a bootloader of the mobile merchant communication device 120 has been unlocked. In an embodiment, the monitoring server 140 may determine the integrity status of the mobile merchant communication device 120 to be unsafe, i.e. non-integer, in case the first integrity status data set 128 and/or the second integrity status data set 128' indicates that the bootloader of the mobile merchant communication device 120 has been unlocked.

In an embodiment, the first integrity status data set 128 and/or the second integrity status data set 128' comprises a chain of certificates for attesting the integrity of one or more cryptographic keys of the mobile merchant communication device 120, wherein the processing circuitry 141 of the monitoring server 140 is configured to determine the current integrity status of the mobile merchant communication device 120 by verifying the integrity of the one or more cryptographic keys of the mobile merchant communication device 120 based on the chain of certificates.

In a further embodiment, the mobile merchant communication device 120 may be configured to execute a payment software application configured to process the payment transaction, wherein the first integrity status data set 128 and/or the second integrity status data set 128' comprises data indicative of a version number of the payment software application and wherein the processing circuitry 141 of the monitoring server 140 is configured to determine the current integrity status of the mobile merchant communication device 120 based on the version number of the payment software application. In an embodiment, the monitoring server 140 may determine the integrity status of the mobile merchant communication device 120 to be unsafe, i.e. non-integer, in case the version number of the payment software application running on the mobile merchant communication device 120 is not the most recent version of the payment software application.

In an embodiment, the first integrity status data set 128 and/or the second integrity status data set 128' comprises data from a gyro sensor of the mobile merchant communication device 120, wherein the processing circuitry 141 of the monitoring server 140 is configured to determine the current integrity status of the mobile merchant communication device 120 by determining whether the data from the gyro sensor of the mobile merchant communication device 120 indicates a movement and/or rotation of the mobile merchant communication device 120.

In an embodiment, the first integrity status data set 128 and/or the second integrity status data set 128' comprises a list of software applications installed on the mobile merchant communication device 120, wherein the processing circuitry 141 of the monitoring server 140 is configured to determine the current integrity status of the mobile merchant communication device 120 by comparing the list of software applications installed on the mobile merchant communication device 120 with a black list of software applications. In an embodiment, the monitoring server 140 may determine the integrity status of the mobile merchant communication device 120 to be unsafe, i.e. non-integer, in case the list of software applications installed on the mobile merchant communication device 120 includes software applications from the blacklist. This blacklist may be maintained in a database stored in the memory 145 of the monitoring server 140.

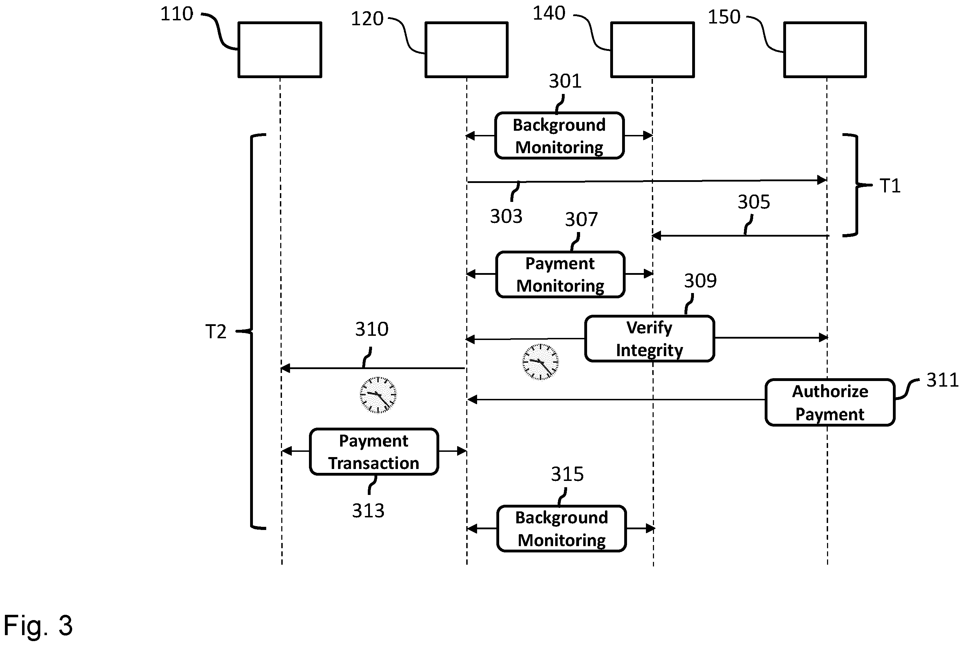

Figure 3 shows a signaling diagram illustrating the interaction of the mobile merchant communication device 120 and the monitoring server 140 with the other components of the electronic payment system 100, i.e. the mobile customer communication device 110 and the payment server 150. In figure 3 the following steps are illustrated, some of which already have been described in the context of figures 1 and 2 above.

In step 301 of figure 3, the mobile merchant communication device 120 and the monitoring server 140 interact such that the monitoring server 140 obtains a first integrity status data set 128 from the mobile merchant communication device 120. As already described above, the monitoring server 140 may pull the first integrity status data set 128 from the mobile merchant communication device 120 or the mobile merchant communication device 120 may actively push the first integrity status data set 128 at the scheduled times to the monitoring server 140. Based on the first integrity status data set 128 the monitoring server 140 may verify and update the current security integrity status of the mobile merchant communication device 120.

In step 303 of figure 3, the mobile merchant communication device 120 requests from the payment server 150 processing of a payment transaction between the mobile merchant communication device 120 and the customer payment device, e.g. the mobile customer communication device 110.

In step 305 of figure 3, the payment server 150 sends an integrity status request to the monitoring server 140, in response to the request from the mobile merchant communication device 120.

In step 307 of figure 3, which may be performed substantially in parallel with steps 303 and/or 305 the monitoring server 140 obtains from the mobile merchant communication device 120, as described above, a second integrity status data set 128' indicative of the current security integrity status of the mobile merchant communication device 120. As already described above, the monitoring server 140 will skip this step, in case the time passed since the latest regular background monitoring (step 301) indicated as T1 in figure 3 is smaller than the pre-defined time interval threshold. In an embodiment, the time interval threshold may be, for instance, in the range between 10 and 30 seconds.

In step 309 of figure 3, the processing circuitry 141 of the monitoring server 140 determines, i.e. verifies the current security integrity status of the mobile merchant communication device 120 based on the second integrity status data set 128' obtained by the monitoring server 140 in step 307 (and possibly a portion of the first integrity status data set 128 obtained in step 301). Moreover, the communication interface 143 of the monitoring server 140 sends an integrity status message to the payment server 150 and the mobile merchant communication device 120. As already described above, the integrity status message for the mobile merchant communication device 120 may include a first time stamp indicating the current time of the monitoring server 140.

In step 310 of figure 3, the processing circuitry 121 of the mobile merchant communication device 120 may add a second time stamp indicating the current time of the mobile merchant communication device 120 to the integrity status message. The communication interface 123 of the mobile merchant communication device 120 forwards the integrity status message, including the first time stamp provided by the monitoring server 140 and the second time stamp provided by the mobile merchant communication device 120, to the mobile customer communication device 110. Advantageously, the first time stamp allows the mobile customer communication device 110 to verify that the integrity status message originally generated by the monitoring server 140 is not a replay of an old message, while the second time stamp provided by the mobile merchant communication device 120 allows the mobile customer communication device 110 to verify that the mobile merchant communication device 120 is not fraudulent or has been compromised, thereby increasing the security of the payment transaction.

In step 311 of figure 3, the payment server 150, in response to the integrity status message from the monitoring server 140, authorizes the payment transaction by sending a corresponding message to the mobile merchant communication device 120.

In step 313 of figure 3, the mobile merchant communication device 120 interacts with the mobile customer communication device 110 for further processing and completing the payment transaction.

In step 315 of figure 3, the monitoring server 140 may interact with the mobile merchant communication device 120 for obtaining a further first integrity status data set 128 from the mobile merchant communication device 120 as part of the regular, possibly periodic background monitoring. Based on the current integrity status data the monitoring server 140 may verify and update the security integrity status of the mobile merchant communication device 120. As illustrated in figure 3 by the time interval T2, the monitoring server 140 may be configured to perform the background monitoring of the mobile merchant communication device 120 with a constant period of, for instance, 5 minutes.

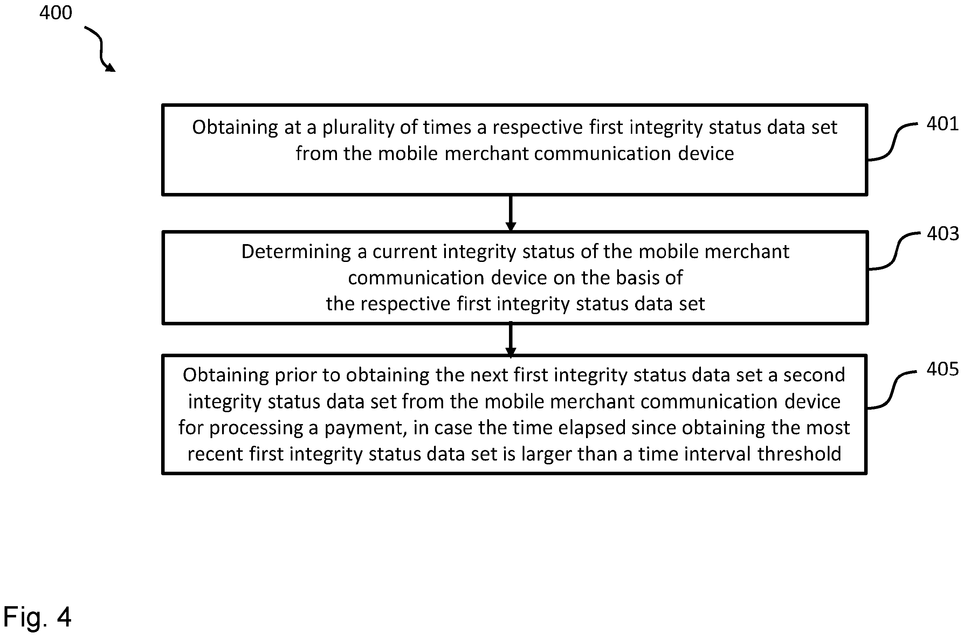

Figure 4 shows a flow diagram illustrating steps of a monitoring method 400 according to an embodiment. The method 400 comprises the steps of:
obtaining 401 at a plurality of times a respective first integrity status data set 128 from the mobile merchant communication device 120, wherein each first integrity status data set 128 is indicative of a current integrity status of the mobile merchant communication device 120;
determining 403 a current integrity status of the mobile merchant communication device 120 on the basis of the respective first integrity status data set 128;
obtaining 405 prior to obtaining the next first integrity status data set 128 a second integrity status data set 128' from the mobile merchant communication device 120 for processing the payment transaction, wherein the second integrity status data set 128' is indicative of the current integrity status of the mobile merchant communication device 120, in case the time elapsed since obtaining the most recent first integrity status data set 128 is larger than a time interval threshold.

The monitoring method 400 can be performed by the monitoring server 140. Thus, further features of the monitoring method 400 result directly from the structure and functionality of the monitoring server 140 as well as its different embodiments described above.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application.

Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A monitoring server (140) for monitoring an integrity status of a mobile merchant communication device (120), the mobile merchant communication device (120) being configured to interact with a customer payment device (110) for processing a payment transaction, wherein the monitoring server (140) comprises:
a communication interface (143) configured to obtain at a plurality of times a respective first integrity status data set (128) from the mobile merchant communication device (120); and
a processing circuitry (141) configured to determine a current integrity status of the mobile merchant communication device (120) on the basis of the respective first integrity status data set (128);
wherein the communication interface (143) is further configured to obtain prior to obtaining the next first integrity status data set (128) a second integrity status data set (128') from the mobile merchant communication device (120) for processing the payment transaction, in case the time elapsed since obtaining the most recent first integrity status data set (128) is larger than a time interval threshold.

2. The monitoring server (140) of claim 1, wherein the processing circuitry (141) is configured, in response to a request from the payment server (150), to determine the current integrity status of the mobile merchant communication device (120) on the basis of the second integrity status data set (128') and to send information about the current integrity status of the mobile merchant communication device (120) determined on the basis of the second integrity status data set (128') to the payment server (150).

3. The monitoring server (140) of claim 1 and 2, wherein the respective first integrity status data set (128) comprises more integrity status data indicative of the current integrity status of the mobile merchant communication device (120) than the second integrity status data set (128').

4. The monitoring server (140) of claim 3, wherein the processing circuitry (141) is configured, in response to a request from the payment server (150), to determine the current integrity status of the mobile merchant communication device (120) on the basis of the most recent first integrity status data set (128) and the second integrity status data set (128') and to send information about the current integrity status of the mobile merchant communication device (120) determined on the basis of the most recent first integrity status data set (128) and the second integrity status data set (128') to the payment server (150).

5. The monitoring server (140) of any one of the preceding claims, wherein the communication interface (143) is configured, in response to a request from the payment server (150), to send information about the current integrity status of the mobile merchant communication device (120) determined on the basis of the most recent first integrity status data set (128) to the payment server (150), in case the time elapsed since obtaining the most recent first integrity status data set (128) is not larger than the time interval threshold.

6. The monitoring server (140) of any one of the preceding claims, wherein the plurality of times are regularly spaced in time.

7. The monitoring server (140) of any one of the preceding claims, wherein the communication interface (143) is further configured to send information about the current integrity status of the mobile merchant communication device (120) to the mobile merchant communication device (120).

8. The monitoring server (140) of claim 7, wherein the communication interface (143) is further configured to send the information about the current integrity status of the mobile merchant communication device (120) together with a first time stamp to the mobile merchant communication device (120).

9. The monitoring server (140) of any one of the preceding claims, wherein the first integrity status data set (128) and/or the second integrity status data set (128') comprises data indicative of whether a bootloader of the mobile merchant communication device is unlocked.

10. The monitoring server (140) of any one of the preceding claims, wherein the first integrity status data set (128) and/or the second integrity status data set (128') comprises a chain of certificates for attesting the integrity of one or more cryptographic keys of the mobile merchant communication device (120) and wherein the processing circuitry (141) is configured to determine the current integrity status of the mobile merchant communication device (120) by verifying the integrity of the one or more cryptographic keys of the mobile merchant communication device (120) based on the chain of certificates.

11. The monitoring server (140) of any one of the preceding claims, wherein the mobile merchant communication device (120) comprises a payment software application configured to process the payment transaction, wherein the first integrity status data set (128) and/or the second integrity status data set (128') comprises data indicative of a version number of the payment software application and wherein the processing circuitry (141) is configured to determine the current integrity status of the mobile merchant communication device (120) based on the version number of the payment software application.

12. The monitoring server (140) of any one of the preceding claims, wherein the first integrity status data set (128) and/or the second integrity status data set (128') comprises data from a gyro sensor of the mobile merchant communication device (120) and wherein the processing circuitry (141) is configured to determine the current integrity status of the mobile merchant communication device (120) by determining whether the data from the gyro sensor of the mobile merchant communication device (120) indicate a movement and/or rotation of the mobile merchant communication device (120).

13. The monitoring server (140) of any one of the preceding claims, wherein the first integrity status data set (128) and/or the second integrity status data set (128') comprises a list of software applications installed on the mobile merchant communication device (120) and wherein the processing circuitry (141) is configured to determine the current integrity status of the mobile merchant communication device (120) by comparing the list of software applications installed on the mobile merchant communication device (120) with a black list of software applications.

14. A mobile merchant communication device (120) configured to interact with a customer payment device (110) for processing a payment transaction, wherein the mobile merchant communication device (120) comprises:
a communication interface (123) configured to send at a plurality of times a respective first integrity status data set (128) to a monitoring server (140), wherein the data of each first integrity status data set (128) is indicative of a current integrity status of the mobile merchant communication device (120),
wherein the communication interface (123) of the mobile merchant communication device (120) is further configured to send a second integrity status data set (128') indicative of the current integrity status of the mobile merchant communication device (120) to the monitoring server (140) for processing the payment transaction, in case the time elapsed since sending the most recent first integrity status data set (128) is larger than a pre-defined time interval threshold.

15. An electronic payment system (100), comprising:
a monitoring server (140) according to any one of claims 1 to 13;
a mobile merchant communication device (120) according to claim 14;
a customer payment device (110); and
a payment transaction server (150), wherein the payment transaction server (150) is configured to transmit a request to the monitoring server for receiving information about a current integrity status of the mobile merchant communication device (120) and to authorize a payment transaction based on the information about the current integrity status of the mobile merchant communication device (120).

16. The electronic payment system of claim 15, wherein the mobile merchant communication device (120) is a smart phone (120) or a tablet computer (120).

17. A method (400) for monitoring an integrity status of a mobile merchant communication device (120), the mobile merchant communication device (120) being configured to interact with a customer payment device (110) for processing a payment transaction, wherein the method (400) comprises:
obtaining (401) at a plurality of times a respective first integrity status data set (128) from the mobile merchant communication device (120);
determining (403) a current integrity status of the mobile merchant communication device (120) on the basis of the respective first integrity status data set (128);
obtaining (405) prior to obtaining the next first integrity status data set (128) a second integrity status data set (128') from the mobile merchant communication device (120) for processing a payment transaction, in case the time elapsed since obtaining the most recent first integrity status data set (128) is larger than a time interval threshold.

## Patentansprüche

1. Überwachungsserver (140) zum Überwachen eines Integritätsstatus einer mobilen Händlerkommunikationsvorrichtung (120), wobei die mobile Händlerkommunikationsvorrichtung (120) ausgebildet ist, mit einer Kundenzahlungsvorrichtung (110) zur Verarbeitung einer Zahlungstransaktion zu interagieren, wobei der Überwachungsserver (140) umfasst:
eine Kommunikationsschnittstelle (143), die ausgebildet ist, an einer Vielzahl von Zeitpunkten einen jeweiligen ersten Integritätsstatusdatensatz (128) von der mobilen Händlerkommunikationsvorrichtung (120) zu erhalten; und
eine Verarbeitungsschaltung (141), die ausgebildet ist, einen aktuellen Integritätsstatus der mobilen Händlerkommunikationsvorrichtung (120) basierend auf dem jeweiligen ersten Integritätsstatusdatensatz (128) zu ermitteln;
wobei die Kommunikationsschnittstelle (143) ferner ausgebildet ist, vor dem Erhalten des nächsten ersten Integritätsstatusdatensatzes (128) einen zweiten Integritätsstatusdatensatz (128') von der mobilen Händlerkommunikationsvorrichtung (120) zur Verarbeitung der Zahlungstransaktion zu erhalten, falls die seit dem Erhalten des aktuellsten ersten Integritätsstatusdatensatzes (128) verstrichene Zeit größer als ein Zeitintervallschwellenwert ist.

2. Überwachungsserver (140) nach Anspruch 1, wobei die Verarbeitungsschaltung (141) ausgebildet ist, ansprechend auf eine Anfrage von dem Zahlungsserver (150) den aktuellen Integritätsstatus der mobilen Händlerkommunikationsvorrichtung (120) basierend auf dem zweiten Integritätsstatusdatensatz (128') zu ermitteln und basierend auf dem zweiten Integritätsstatusdatensatz (128') ermittelte Informationen über den aktuellen Integritätsstatus der mobilen Händlerkommunikationsvorrichtung (120) an den Zahlungsserver (150) zu senden.

3. Überwachungsserver (140) nach Anspruch 1 und 2, wobei der jeweilige erste Integritätsstatusdatensatz (128) mehr den aktuellen Integritätsstatus der mobilen Händlerkommunikationsvorrichtung (120) angebende Integritätsstatusdaten umfasst als der zweite Integritätsstatusdatensatz (128').

4. Überwachungsserver (140) nach Anspruch 3, wobei die Verarbeitungsschaltung (141) ausgebildet ist, ansprechend auf eine Anfrage von dem Zahlungsserver (150) den aktuellen Integritätsstatus der mobilen Händlerkommunikationsvorrichtung (120) basierend auf dem aktuellsten ersten Integritätsstatusdatensatz (128) und dem zweiten Integritätsstatusdatensatz (128') zu ermitteln sowie basierend auf dem aktuellsten ersten Integritätsstatusdatensatz (128) und dem zweiten Integritätsstatusdatensatz (128') ermittelte Informationen an den Zahlungsserver (150) zu senden.

5. Überwachungsserver (140) nach einem der vorhergehenden Ansprüche, wobei die Kommunikationsschnittstelle (143) ausgebildet ist, ansprechend auf eine Anfrage von dem Zahlungsserver (150) basierend auf dem aktuellsten ersten Integritätsstatusdatensatz (128) ermittelte Informationen über den aktuellen Integritätsstatus der mobilen Händlerkommunikationsvorrichtung (120) an den Zahlungsserver (150) zu senden, falls die seit dem Erhalten des aktuellsten ersten Integritätsstatusdatensatzes (128) verstrichene Zeit nicht größer als der Zeitintervallschwellenwert ist.

6. Überwachungsserver (140) nach einem der vorhergehenden Ansprüche, wobei die Vielzahl von Zeitpunkten zeitlich regelmäßig beabstandet ist.

7. Überwachungsserver (140) nach einem der vorhergehenden Ansprüche, wobei die Kommunikationsschnittstelle (143) ferner ausgebildet ist, Informationen über den aktuellen Integritätsstatus der mobilen Händlerkommunikationsvorrichtung (120) an die mobile Händlerkommunikationsvorrichtung (120) zu senden.

8. Überwachungsserver (140) nach Anspruch 7, wobei die Kommunikationsschnittstelle (143) ferner ausgebildet ist, die Informationen über den aktuellen Integritätsstatus der mobilen Händlerkommunikationsvorrichtung (120) zusammen mit einem ersten Zeitstempel an die mobile Händlerkommunikationsvorrichtung (120) zu senden.

9. Überwachungsserver (140) nach einem der vorhergehenden Ansprüche, wobei der erste Integritätsstatusdatensatz (128) und/oder der zweite Integritätsstatusdatensatz (128') Daten umfassen, die angeben, ob ein Bootloader der mobilen Händlerkommunikationsvorrichtung entsperrt ist.

10. Überwachungsserver (140) nach einem der vorhergehenden Ansprüche, wobei der erste Integritätsstatusdatensatz (128) und/oder der zweite Integritätsstatusdatensatz (128') eine Kette von Zertifikaten zur Attestierung der Integrität einer oder mehrerer kryptografischer Schlüssel der mobilen Händlerkommunikationsvorrichtung (120) umfasst, und wobei die Verarbeitungsschaltung (141) ausgebildet ist, den aktuellen Integritätsstatus der mobilen Händlerkommunikationsvorrichtung (120) durch Überprüfung der Integrität des einen oder der mehreren kryptografischen Schlüssel basierend auf der Kette von Zertifikaten zu ermitteln.

11. Überwachungsserver (140) nach einem der vorhergehenden Ansprüche, wobei die mobile Händlerkommunikationsvorrichtung (120) eine Zahlungssoftwareanwendung umfasst, die ausgebildet ist, die Zahlungstransaktion zu verarbeiten, wobei der erste Integritätsstatusdatensatz (128) und/oder der zweite Integritätsstatusdatensatz (128') Daten umfasst, die eine Versionsnummer der Zahlungssoftwareanwendung angeben, und wobei die Verarbeitungsschaltung (141) ausgebildet ist, den aktuellen Integritätsstatus der mobilen Händlerkommunikationsvorrichtung (120) basierend auf der Versionsnummer der Zahlungssoftwareanwendung zu ermitteln.

12. Überwachungsserver (140) nach einem der vorhergehenden Ansprüche, wobei der erste Integritätsstatusdatensatz (128) und/oder der zweite Integritätsstatusdatensatz (128') Daten von einem Gyrosensor der mobilen Händlerkommunikationsvorrichtung (120) umfasst, und wobei die Verarbeitungsschaltung (141) ausgebildet ist, den aktuellen Integritätsstatus der mobilen Händlerkommunikationsvorrichtung (120) zu ermitteln, indem ermittelt wird, ob die Daten von dem Gyrosensor der mobilen Händlerkommunikationsvorrichtung (120) eine Bewegung und/oder Drehung der mobilen Händlerkommunikationsvorrichtung (120) angeben.

13. Überwachungsserver (140) nach einem der vorhergehenden Ansprüche, wobei der erste Integritätsstatusdatensatz (128) und/oder der zweite Integritätsstatusdatensatz (128') eine Liste von auf der mobilen Kommunikationsvorrichtung (120) installierten Softwareanwendungen umfasst, und wobei die Verarbeitungsschaltung (141) ausgebildet ist, den aktuellen Integritätsstatus der mobilen Händlerkommunikationsvorrichtung (120) zu ermitteln, indem die Liste der auf der mobilen Händlerkommunikationsvorrichtung (120) installierten Softwareanwendungen mit einer Blacklist von Softwareanwendungen vergleichen wird.

14. Mobile Händlerkommunikationsvorrichtung (120), die ausgebildet ist, mit einer Kundenzahlungsvorrichtung (110) zur Verarbeitung einer Zahlungstransaktion zu interagieren, wobei die mobile Händlerkommunikationsvorrichtung (120) umfasst:
eine Kommunikationsschnittstelle (123), die ausgebildet ist, an einer Vielzahl von Zeitpunkten einen jeweiligen ersten Integritätsstatusdatensatz (128) an einen Überwachungsserver (140) zu senden, wobei die Daten jedes ersten Integritätsstatusdatensatzes (128) einen aktuellen Integritätsstatus der mobilen Händlerkommunikationsvorrichtung (120) angeben,
wobei die Kommunikationsschnittstelle (123) der mobilen Händlerkommunikationsvorrichtung (120) ferner ausgebildet ist, einen den aktuellen Integritätsstatus der mobilen Händlerkommunikationsvorrichtung (120) angebenden zweiten Integritätsstatusdatensatz (128') an den Überwachungsserver (140) zur Verarbeitung der Zahlungstransaktion zu senden, falls die seit dem Senden des aktuellsten ersten Integritätsstatusdatensatzes (128) verstrichene Zeit größer als ein vordefinierter Zeitintervallschwellenwert ist.

15. Elektronisches Zahlungssystem (100), umfassend:
einen Überwachungsserver (140) nach einem der Ansprüche 1 bis 13;
eine mobile Händlerkommunikationsvorrichtung (120) nach Anspruch 14;
eine Kundenzahlungsvorrichtung (110); und
einen Zahlungstransaktionsserver (150), wobei der Zahlungstransaktionsserver (150) ausgebildet ist, eine Anfrage an den Überwachungsserver zu übermitteln, um Informationen über einen aktuellen Integritätsstatus der mobilen Händlerkommunikationsvorrichtung (120) zu erhalten und basierend auf den Informationen über den aktuellen Integritätsstatus der mobilen Händlerkommunikationsvorrichtung (120) eine Zahlungstransaktion zu autorisieren.

16. Elektronisches Zahlungssystem nach Anspruch 15, wobei die mobile Händlerkommunikationsvorrichtung (120) ein Smartphone (120) oder ein Tablet-Computer (120) ist.

17. Verfahren (400) zum Überwachen eines Integritätsstatus einer mobilen Händlerkommunikationsvorrichtung (120), wobei die mobile Händlerkommunikationsvorrichtung (120) ausgebildet ist, mit einer Kundenzahlungsvorrichtung (110) zur Verarbeitung einer Zahlungstransaktion zu interagieren, wobei das Verfahren (400) umfasst:
Erhalten (401) eines jeweiligen ersten Integritätsstatusdatensatzes (128) von der mobilen Händlerkommunikationsvorrichtung (120) an einer Vielzahl von Zeitpunkten;
Ermitteln (403) eines aktuellen Integritätsstatus der mobilen Händlerkommunikationsvorrichtung (120) basierend auf dem jeweiligen ersten Integritätsstatusdatensatz (128);
Erhalten (405) vor dem Erhalten des nächsten ersten Integritätsstatusdatensatzes (128) eines zweiten Integritätsstatusdatensatzes (128') von der mobilen Händlerkommunikationsvorrichtung (120) zur Verarbeitung einer Zahlungstransaktion, falls die seit dem Erhalten des aktuellsten ersten Integritätsstatusdatensatzes (128) verstrichene Zeit größer als ein Zeitintervallschwellenwert ist.

## Revendications

1. Serveur de surveillance (140) pour surveiller un état d'intégrité d'un dispositif de communication marchand mobile (120), le dispositif de communication marchand mobile (120) étant configuré pour interagir avec un dispositif de paiement client (110) pour traiter une transaction de paiement, dans lequel le serveur de surveillance (140) comprend :
une interface de communication (143) configurée pour obtenir à plusieurs reprises un premier ensemble de données d'état d'intégrité respectif (128) à partir du dispositif de communication marchand mobile (120) ; et
un circuit de traitement (141) configuré pour déterminer un état d'intégrité actuel du dispositif de communication marchand mobile (120) sur la base du premier ensemble de données d'état d'intégrité respectif (128) ;
dans lequel l'interface de communication (143) est en outre configurée pour obtenir, avant d'obtenir le premier ensemble de données d'état d'intégrité (128) suivant, un deuxième ensemble de données d'état d'intégrité (128') à partir du dispositif de communication marchand mobile (120) pour traiter la transaction de paiement, dans le cas où le temps écoulé depuis l'obtention du premier ensemble de données d'état d'intégrité le plus récent (128) est supérieur à un seuil d'intervalle de temps.

2. Serveur de surveillance (140) selon la revendication 1, dans lequel les circuits de traitement (141) sont configurés, en réponse à une requête du serveur de paiement (150), pour déterminer l'état d'intégrité actuel du dispositif de communication marchand mobile (120) sur la base du deuxième ensemble de données d'état d'intégrité (128') et pour envoyer des informations sur l'état d'intégrité actuel du dispositif de communication mobile pour commerçant (120) déterminé sur la base du deuxième ensemble de données d'état d'intégrité (128') au système de paiement serveur (150).

3. Serveur de surveillance (140) selon les revendications 1 et 2, dans lequel le premier ensemble de données d'état d'intégrité respectif (128) comprend plus de données d'état d'intégrité indicatives de l'état d'intégrité actuel du dispositif de communication marchand mobile (120) que le deuxième état d'intégrité ensemble de données (128 ').

4. Serveur de surveillance (140) selon la revendication 3, dans lequel les circuits de traitement (141) sont configurés, en réponse à une requête du serveur de paiement (150), pour déterminer l'état d'intégrité actuel du dispositif de communication marchand mobile (120) sur la base du premier ensemble de données d'état d'intégrité (128) et du deuxième ensemble de données d'état d'intégrité (128 ') le plus récent et pour envoyer des informations sur l'état d'intégrité actuel du dispositif de communication marchand mobile (120) déterminé sur la base de le premier ensemble de données d'état d'intégrité (128) le plus récent et le deuxième ensemble de données d'état d'intégrité (128') au serveur de paiement (150).

5. Serveur de surveillance (140) selon l'une quelconque des revendications précédentes, dans lequel l'interface de communication (143) est configurée, en réponse à une requête du serveur de paiement (150), pour envoyer des informations sur l'état d'intégrité actuel du mobile dispositif de communication marchand (120) déterminé sur la base du premier ensemble de données d'état d'intégrité le plus récent (128) au serveur de paiement (150), dans le cas où le temps écoulé depuis l'obtention du premier ensemble de données d'état d'intégrité le plus récent (128) n'est pas supérieur au seuil d'intervalle de temps.

6. Serveur de surveillance (140) selon l'une quelconque des revendications précédentes, dans lequel la pluralité de moments sont régulièrement espacés dans le temps.

7. Serveur de surveillance (140) selon l'une quelconque des revendications précédentes, dans lequel l' interface de communication (143) est en outre configurée pour envoyer des informations sur l'état d'intégrité actuel du dispositif de communication marchand mobile (120) au dispositif de communication marchand mobile (120).

8. Serveur de surveillance (140) selon la revendication 7, dans lequel l'interface de communication (143) est en outre configurée pour envoyer les informations sur l'état d'intégrité actuel du dispositif de communication du commerçant mobile (120) conjointement avec un premier horodatage au commerçant mobile dispositif de communication (120).

9. Serveur de surveillance (140) selon l'une quelconque des revendications précédentes, dans lequel le premier ensemble de données d'état d'intégrité (128) et/ou le deuxième ensemble de données d'état d'intégrité (128') comprennent des données indiquant si un chargeur de démarrage du commerçant mobile Le périphérique de communication est déverrouillé.

10. Serveur de surveillance (140) selon l'une quelconque des revendications précédentes, dans lequel le premier ensemble de données d'état d'intégrité (128) et/ou le deuxième ensemble de données d'état d'intégrité (128') comprennent une chaîne de certificats pour attester l'intégrité d'un ou plusieurs clés cryptographiques du dispositif de communication marchand mobile (120) et dans lequel les circuits de traitement (141) sont configurés pour déterminer l'état d'intégrité actuel du dispositif de communication marchand mobile (120) en vérifiant l'intégrité de la ou des clés cryptographiques de le dispositif de communication marchand mobile (120) sur la base de la chaîne de certificats.

11. Serveur de surveillance (140) selon l'une quelconque des revendications précédentes, dans lequel le dispositif de communication marchand mobile (120) comprend une application logicielle de paiement configurée pour traiter la transaction de paiement, dans laquelle le premier ensemble de données d'état d'intégrité (128) et/ou le deuxième ensemble de données d'état d'intégrité (128') comprend des données indicatives d'un numéro de version de l'application logicielle de paiement et dans lequel les circuits de traitement (141) sont configurés pour déterminer l'état d'intégrité actuel du dispositif de communication marchand mobile (120) sur la base du numéro de version du logiciel de paiement.

12. Serveur de surveillance (140) selon l'une quelconque des revendications précédentes, dans lequel le premier ensemble de données d'état d'intégrité (128) et/ou le deuxième ensemble de données d'état d'intégrité (128') comprennent des données provenant d'un capteur gyroscopique du système de communication mobile marchand dispositif (120) et dans lequel les circuits de traitement (141) sont configurés pour déterminer l'état d'intégrité actuel du dispositif de communication marchand mobile (120) en déterminant si les données provenant du capteur gyroscopique du dispositif de communication marchand mobile (120) indiquent un mouvement et/ou rotation du dispositif de communication marchand mobile (120).

13. Serveur de surveillance (140) selon l'une quelconque des revendications précédentes, dans lequel le premier ensemble de données d'état d'intégrité (128) et/ou le deuxième ensemble de données d'état d'intégrité (128') comprennent une liste d'applications logicielles installées sur le commerçant mobile dispositif de communication mobile (120) et dans lequel les circuits de traitement (141) sont configurés pour déterminer l'état d'intégrité actuel du dispositif de communication mobile pour commerçant (120) en comparant la liste des applications logicielles installées sur le dispositif de communication mobile pour commerçant (120) avec un symbole noir liste des applications logicielles.

14. Dispositif de communication mobile pour commerçant (120) configuré pour interagir avec un dispositif de paiement client (110) pour traiter une transaction de paiement, dans lequel le dispositif de communication mobile pour commerçant (120) comprend :
une interface de communication (123) configurée pour envoyer à plusieurs reprises un premier ensemble de données d'état d'intégrité respectif (128) à un serveur de surveillance (140), les données de chaque premier ensemble de données d'état d'intégrité (128) étant indicatives d'un courant état d'intégrité du dispositif de communication marchand mobile (120),
dans lequel l'interface de communication (123) du dispositif de communication marchand mobile (120) est en outre configurée pour envoyer un deuxième ensemble de données d'état d'intégrité (128') indiquant l'état d'intégrité actuel du dispositif de communication marchand mobile (120) au serveur de surveillance (140) pour traiter la transaction de paiement, dans le cas où le temps écoulé depuis l'envoi du premier ensemble de données d'état d'intégrité le plus récent (128) est supérieur à un seuil d'intervalle de temps prédéfini.

15. Système de paiement électronique (100), comprenant :
un serveur de surveillance (140) selon l'une quelconque des revendications 1 à 13 ;
un dispositif de communication marchand mobile (120) selon la revendication 14 ;
un dispositif de paiement client (110) ; et
un serveur de transactions de paiement (150), le serveur de transactions de paiement (150) étant configuré pour transmettre une requête au serveur de surveillance pour recevoir des informations sur un état d'intégrité actuel du dispositif de communication marchand mobile (120) et pour autoriser une transaction de paiement basée sur les informations concernant l'état d'intégrité actuel du dispositif de communication marchand mobile (120).

16. Système de paiement électronique selon la revendication 1 à 5, dans lequel le dispositif de communication marchand mobile (120) est un téléphone intelligent (120) ou une tablette électronique (120).

17. Procédé (400) pour surveiller un état d'intégrité d'un dispositif de communication marchand mobile (120), le dispositif de communication marchand mobile (120) étant configuré pour interagir avec un dispositif de paiement client (110) pour traiter une transaction de paiement, dans lequel le le procédé (400) comprend :
obtenir (401) à plusieurs reprises un premier ensemble de données d'état d'intégrité respectif (128) à partir du dispositif de communication marchand mobile (120) ;
déterminer (403) un état d'intégrité actuel du dispositif de communication marchand mobile (120) sur la base du premier ensemble de données d'état d'intégrité respectif (128)
obtenir (405) avant d'obtenir le premier ensemble de données d'état d'intégrité suivant (128), un deuxième ensemble de données d'état d'intégrité (128') à partir du dispositif de communication marchand mobile (120) pour traiter une transaction de paiement, dans le cas où le temps écoulé depuis l'obtention de l'ensemble de données d'état d'intégrité (128) le premier ensemble de données d'état d'intégrité le plus récent (128) est supérieur à un seuil d'intervalle de temps.
